# EUROPEAN PATENT APPLICATION

(11) **EP 4 831 112 A1**
(43) Date of publication of application: **28.10.2026**
(21) Application number: 24908023.5
(22) Date of filing: 17.12.2024
(51) Int. Cl.: C01B 3/04, C01B 3/56, C01C 1/10, C01C 1/02, B63B 25/16, B63B 35/44

(54) **DEVICE FOR PRODUCING HYDROGEN FROM AMMONIA FOR SHIP**

(30) Priority: 18.12.2023 KR 20230184688
(71) Applicant: POSCO Holdings Inc., Pohang-si, Gyeongsangbuk-do 37859 (KR)
(72) Inventor: KIM, Young-Hun, Pohang-si, Gyeongsangbuk-do 37877 (KR); RHEE, Chang-Houn, Pohang-si, Gyeongsangbuk-do 37877 (KR); LEE, Man-Su, Pohang-si, Gyeongsangbuk-do 37877 (KR); PARK, Hai-Woong, Pohang-si, Gyeongsangbuk-do 37877 (KR); JOO, Sang-Wook, Pohang-si, Gyeongsangbuk-do 37877 (KR); KIM, Beom-Sik, Pohang-si, Gyeongsangbuk-do 37877 (KR); KWON, Gi-Hun, Pohang-si, Gyeongsangbuk-do 37877 (KR)
(74) Representative: Pfenning, Meinig & Partner mbB
(86) International application number: PCT/KR2024/020522
(87) International publication number: WO 2025/135740

(57) **Abstract**

The present invention relates to a device for producing hydrogen from ammonia for a ship. According to the present invention, high-pressure hydrogen can be produced by using liquefied ammonia for a ship, and hydrogen can be economically produced by utilizing unconverted ammonia discharged from a decomposition reactor and off-gas discharged from a pressure swing adsorption device as a heat source for ammonia decomposition through a heat exchange network of the ship.

## Description

### Technical Field

The present disclosure relates to a device for producing hydrogen from ammonia for a ship.

### Background Art

In general, significant efforts are being made to protect the environment and produce sustainable energy. As part of these efforts, natural gas is currently being mixed with hydrogen at a rate of 10 to 30% in order to increase the supply of hydrogen for city gas. In addition, since the only byproduct produced during combustion of hydrogen is steam(water), mixing hydrogen into city gas may reduce carbon dioxide emissions.

Recently, as the goal of carbon neutrality has been established worldwide in connection with climate change, hydrogen (H2) is receiving more attention and efforts to produce hydrogen are being continued because it may be used in various fields of application.

The natural gas reforming process for generating hydrogen using heavy oil and natural gas as fossil fuels after reforming or byproduct hydrogen generated during steelmaking or petroleum refining processes as an energy source is a method that emits carbon dioxide during the reaction, and thus the importance of a hydrogen production process using ammonia, which does not generate carbon dioxide during the reaction, is increasing.

In particular, ammonia is emphasized as an essential technology for achieving carbon neutrality in that it may almost utilize existing storage and transportation infrastructures as a super-high capacity hydrogen storage and carrier means having a storage capacity of 120 kg/m³.

However, conventional processes for producing hydrogen from ammonia require a significant land area due to the large volume of tanks and associated utility requirements. In addition, because ammonia is a toxic gas, safety risks and environmental impact assessments must be considered for onshore sites.

In the prior art (Korean Patent Application No. 10-2022-0034458), which is developed for a ship, liquid ammonia is stored in conditions of temperature from -33 to 30°C and pressure from 10 to 15 bara. However, in order to produce hydrogen on a large scale, it is necessary to construct a system capable of supplying ammonia at pressures of 30 barg to 90 barg. In addition, in order to apply a large-scale hydrogen supply system, an ammonia storage device should be mounted in a modular form on the topside, and configured in consideration of heating/cooling utilities that may be supplied from a hull of a ship.

Patent Literature 1: Korean Patent Application No. 10-2022-0034458.

### Disclosure of Invention

### Technical Problem

An aspect of the present disclosure is to provide a hydrogen production device producing high-pressure hydrogen using liquefied ammonia in a ship.

The present disclosure may economically produce hydrogen by using the undissociated ammonia discharged from the decomposition reactor and off-gas discharged from the pressure swing absorption device as a heat source of ammonia decomposition through a heat exchange network of a ship.

The hydrogen production device of the present disclosure may produce a large amount of hydrogen in a minimum area by utilizing an infrastructure of a ship.

### Technical Solution

According to an aspect of the present disclosure, the hydrogen production device includes an ammonia storage tank for a ship; a tank pump configured to pressurize liquid ammonia in the ammonia storage tank for a ship, and supply the pressurized liquid ammonia to a suction drum; a suction drum configured to stabilize pressure of the liquid ammonia supplied from the tank pump, and supply the pressurized liquid ammonia to a pressurizing pump; a pressurizing pump configured to pressurize the liquid ammonia supplied from the suction drum, vaporize the liquid ammonia, and supply the produced gaseous ammonia to a distributor; a distributor configured to distribute and supply the gaseous ammonia supplied from the pressurizing pump to a decomposition reactor and a combustor; a combustor configured to combust the gaseous ammonia supplied from the distributor, and supply heat to the decomposition reactor; a decomposition reactor configured to decompose the gaseous ammonia supplied from the distributor into hydrogen and nitrogen at 400°C to 900°C in the presence of a catalyst; a pressure swing absorption (PSA) device configured to receive off-gas discharged from the decomposition reactor, and separate hydrogen therefrom; and a denitrification reactor configured to receive off-gas discharged from the combustor, and decompose nitrogen oxides into nitrogen and steam(water).

The hydrogen production device may have a conversion rate of the ammonia decomposition reaction occurring in the decomposition reactor of 80% or more.

The hydrogen production device may include two or more pressure swing absorption devices.

The hydrogen production device may include a first pressure swing absorption device configured to receive off-gas discharged from the decomposition reactor and adsorb ammonia, and a second pressure swing absorption device configured to receive off-gas discharged from the first pressure swing absorption device and adsorb nitrogen.

The hydrogen production device may further include a purge gas supply line configured to supply off-gas discharged from the second pressure swing absorption device as a purge gas to the first pressure swing absorption device.

The distributor may distribute and supply the gaseous ammonia supplied from the pressurizing pump to a decomposition reactor, a combustor, and a denitrification reactor, and the denitrification reactor may use the gaseous ammonia supplied from the distributor as a reducing agent.

The hydrogen production device may further include a first low-pressure heat recovery heat exchanger disposed upstream of the combustor.

The hydrogen production device may further include a second low-pressure heat recovery heat exchanger disposed downstream of the denitrification reactor.

The hydrogen production device may further include a high-pressure heat recovery heat exchanger disposed upstream of the decomposition reactor.

The hydrogen production device may further include a first heat exchanger disposed downstream of the pressurizing pump.

The hydrogen production device may further include a second heat exchanger disposed upstream of the pressure swing absorption device.

The hydrogen production device may further include a mixer between the distributor and the combustor.

The hydrogen production device may further include a re-liquefaction device configured to receive gaseous ammonia from the ammonia storage tank for a ship or the suction drum, re-liquefy the received gaseous ammonia, and re-supply the re-liquefied ammonia back to the ammonia storage tank for a ship or the suction drum.

The hydrogen production device may supply the gaseous ammonia discharged from the second low-pressure heat recovery heat exchanger to a re-liquefaction device.

The hydrogen production device may further include a fan disposed downstream of the denitrification reactor.

According to another aspect of the present disclosure, there is provided a ship including the hydrogen production device.

### Advantageous effects of Invention

According to an aspect the present disclosure, high-purity hydrogen may be produced without generating carbon dioxide emissions.

When the conventional ammonia ship infrastructure is combined with a hydrogen production device of the present disclosure, large volumes of hydrogen may be produced economically in a minimum area.

### Brief Description Of The Drawings

FIG. 1 is a schematic view of a hydrogen production device of the present disclosure.
FIG. 2 is a view showing adsorption selectivity of the pressure swing absorption device for each gas.
FIG. 3 is a view showing the removal rate of nitrogen oxides according to temperature in a denitrification reactor.
FIG. 4 is a schematic view of a hydrogen production device according to an embodiment of the present disclosure.
FIG. 5 is a graph of the conversion rate of ammonia to nitrogen and hydrogen as a function of temperature and pressure in the decomposition reactor.

### Embodiments of the Invention

Hereinafter, a preferred embodiment of the present disclosure will be described. However, it should be noted that the embodiments of the present disclosure may be modified in many different forms and are not limited to the following description.

The present disclosure relates to a hydrogen production device for producing high-purity hydrogen using liquefied ammonia on a ship.

Ammonia has a storage capacity of 120 kg/m³ and may be stored at high pressure as a super-high capacity hydrogen storage and carrier. Therefore, in the process for producing hydrogen using ammonia, no pressurization is required during gas separation, thereby reducing energy consumption required for hydrogen production and increasing energy efficiency. In addition, since the liquefaction temperature of ammonia is high, it may be advantageously stored in liquid form and transported over long distances.

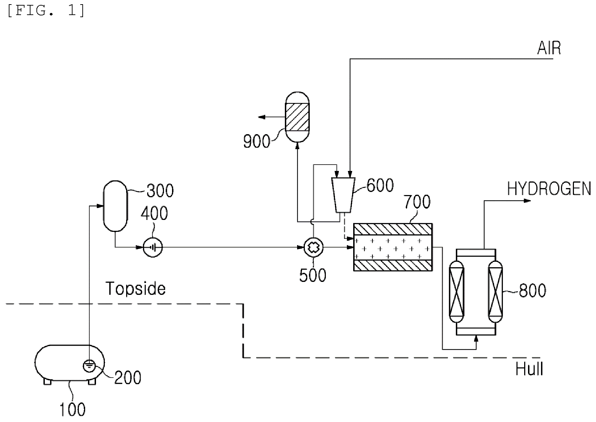

FIG. 1 is a schematic view of a hydrogen production device according to an embodiment of the present disclosure. Hereinafter, the present disclosure will be described in more detail with reference to FIG. 1.

More particularly, according to an aspect of the present disclosure, a hydrogen production device includes an ammonia storage tank for a ship 100; a tank pump 200 configured to pressurize liquid ammonia in the ammonia storage tank for a ship 100, and supply the pressurized liquid ammonia to a suction drum 300; a suction drum 300 configured to stabilize pressure of the liquid ammonia supplied from the tank pump 200, and supply the pressurized liquid ammonia to a pressurizing pump 400; a pressurizing pump 400 configured to pressurize the liquid ammonia supplied from the suction drum 300, vaporize the liquid ammonia, and supply the produced gaseous ammonia to a distributor 500; a distributor 500 configured to distribute and supply the gaseous ammonia supplied from the pressurizing pump 400 to a decomposition reactor 700, a combustor 600, and a denitrification reactor 900; a combustor 600 configured to combust the gaseous ammonia supplied from the distributor 500, and supply heat to the decomposition reactor 700; a decomposition reactor 700 configured to decompose the gaseous ammonia supplied from the distributor into hydrogen and nitrogen at 400°C to 900°C in the presence of a catalyst; a pressure swing absorption (PSA) device 800 configured to receive off-gas discharged from the decomposition reactor 700, and separate hydrogen therefrom; and a denitrification reactor 900 configured to receive off-gas discharged from the combustor 600, and decompose nitrogen oxides into nitrogen and steam.

The hydrogen production device of the present disclosure includes an ammonia storage tank for a ship 100.

The ammonia storage tank for a ship 100 may store liquefied ammonia at a temperature of about -33°C and a pressure of about 1 barg.

The hydrogen production device of the present disclosure includes a tank pump 200, which pressurizes liquid ammonia inside an ammonia storage tank for a ship 100 and supplies it to a suction drum 300. The tank pump 200 primarily pressurizes the stored low-temperature ammonia at a tank pressure of 5 barg or higher and supplies it to the suction drum 300 in order to efficiently vaporize the ammonia.

The hydrogen production device of the present disclosure includes a suction drum 300, which stabilizes pressure of liquid ammonia and supplies it to the pressurizing pump 400.

In order to stably increase the pressure of ammonia in the pressurizing pump 400 to an ultrahigh pressure, the ammonia supplied to the suction drum 300 maintains a liquid phase.

The hydrogen production device of the present disclosure includes a pressurizing pump 400, which pressurizes and vaporizes liquid ammonia and supplies gaseous ammonia to the decomposition reactor 700 through the distributor 500.

The liquid ammonia discharged from the suction drum 300 is supplied to a pressurizing pump 400 and pressurized at 60 to 90 barg to be vaporized. The reaction equation of the ammonia vaporization reaction occurring in the pressurizing pump 400 is shown below (Formula 1). [Formula 1] ${NH}_{3} \left(l\right) \to {NH}_{3} \left(g\right) \left(ΔH=+46.5 kJ/mol\right)$

The hydrogen production device of the present disclosure includes a distributor 500, which distributes and supplies gaseous ammonia supplied from the pressurizing pump 400 to the decomposition reactor 700 and the combustor 600.

The hydrogen production device of the present disclosure includes a combustor 600 for burning gaseous ammonia supplied from the distributor 500 to supply heat to the decomposition reactor 700.

A reaction equation of the combustion reaction of ammonia occurring in the combustor 600 is shown Formula 2 below. [Formula 2] $4 {NH}_{3} + 3 {O}_{2} \to {2 N}_{2} + 6 {H}_{2} O \left(ΔH=-317 kJ/mol\right)$

When the hydrogen production device includes a mixer, the mixed gas supplied to the combustor 600 contains hydrogen. The combustion reaction of hydrogen is shown in Formula 3 below. [Formula 3] $2 {H}_{2} + {o}_{2} \to 2 {H}_{2} O \left(ΔH=-286 kJ/mol\right)$

Since the combustor 600 of the present disclosure burns ammonia and hydrogen which are carbon-free fuels, no carbon dioxide is generated in the combustor 600.

Since the combustion reaction of ammonia and hydrogen is an exothermic reaction, the heat released from the reaction may be used as a heat source for the ammonia decomposition reaction.

The hydrogen production device of the present disclosure includes a decomposition reactor 700, which decomposes gaseous ammonia supplied from the distributor 500 into hydrogen and nitrogen in the presence of a catalyst at 400 to 900°C, specifically, 700 to 900°C. In the decomposition reactor 700, the ammonia decomposition reaction occurs according to Formula 4 below. [Formula 4] $2 {NH}_{3} \to {N}_{2} + 3 {H}_{2} \left(ΔH=+46 kJ/mol\right)$

In this case, since the ammonia decomposition reaction is an endothermic reaction, supply of reaction heat is required.

The conversion rate of the ammonia decomposition reaction occurring in the decomposition reactor 700 is preferably at least 80%.

When the temperature of the decomposition reactor 700 is maintained at 700°C or higher, hydrogen production through an ammonia decomposition reaction with a conversion rate of 80% or more may be performed at 60 barg to 90 barg.

The off-gas discharged from the decomposition reactor 700 includes nitrogen, hydrogen and undissociated ammonia.

The hydrogen production device of the present disclosure includes a pressure swing absorption (PSA) device for separating hydrogen by receiving the off-gas discharged from the decomposition reactor 700.

The pressure swing absorption device 800 is configured to separate a mixed gas by using the difference in adsorptive selectivity of an adsorbent for adsorbates and operates in such a manner that an adsorption step for separating weak-adsorbed components from strong-adsorbed components is performed at high pressure and desorption of adsorbed components is carried out by lowering the pressure of an adsorption tower so as to regenerate the adsorbent. The pressure swing absorption device 800 includes two or more adsorption towers, which are alternately operated when the number of adsorption towers is two. An adsorbent is filled inside each adsorption tower, and ammonia and nitrogen are adsorbed and separated from purified compressed air supplied from the air buffer tank, thereby continuously producing oxygen having a high concentration. Periodically, the first adsorption tower having adsorbed ammonia and nitrogen is regenerated by desorbing residual ammonia and residual nitrogen, while the second adsorption tower continues to produce oxygen having a high concentration through the same adsorption process.

The pressure swing absorption device 800 may include two or more types of adsorbents. In this case, a mixed adsorbent including two or more types of adsorbents in one adsorption tower may be used. Alternatively, different types of adsorbents may be used for two or more adsorption towers.

The hydrogen production device of the present disclosure may include two or more pressure swing absorption devices. In this case, the two or more pressure swing absorption devices may be expressed as a first pressure swing absorption device, a second pressure swing absorption device, and so on.

According to an aspect of the present disclosure, the hydrogen production device may include a first pressure swing absorption device configured to receive off-gas discharged from the decomposition reactor 700 and adsorb ammonia; and a second pressure swing absorption device configured to receive off-gas discharged from the first pressure swing absorption device and adsorb nitrogen. In this case, the first pressure swing absorption device may use an adsorbent having high selectivity for adsorption of ammonia as the adsorbate so that it may adsorb ammonia with high efficiency, and similarly, the second pressure swing absorption device may use an adsorbent having high selectivity for adsorption of nitrogen as the adsorbate so that it may adsorb nitrogen with high efficiency. Alternatively, the first pressure swing absorption device and the second pressure swing absorption device may use mixed adsorbents in which two or more kinds of adsorbents are mixed. In this case, the first pressure swing absorption device and the second pressure swing absorption device may use the same mixed adsorbent.

The adsorbent may be at least one selected from the group consisting of a carbon molecular sieve (CMS), zeolite, metal-organic frameworks (MOFs), covalent organic frameworks (COFs), activated carbon, alumina, silica and the like.

When the hydrogen production device includes a first pressure swing absorption device and a second pressure swing absorption device, it may further include a purge gas supply line configured to supply the off-gas discharged from the second pressure swing absorption device as a purge gas to the first pressure swing absorption device. In this case, the recovery rate of hydrogen may be increased.

In the pressure swing absorption device 800, hydrogen and off-gas are discharged. The off-gas discharged from the pressure swing absorption device 800 includes ammonia, nitrogen, and unseparated hydrogen. The hydrogen discharged from the pressure swing absorption device 800 is incorporated into a land pipeline network. The off-gas discharged from the pressure swing absorption device 800 may be supplied to the first low-pressure heat recovery heat exchanger 1001 or the mixer.

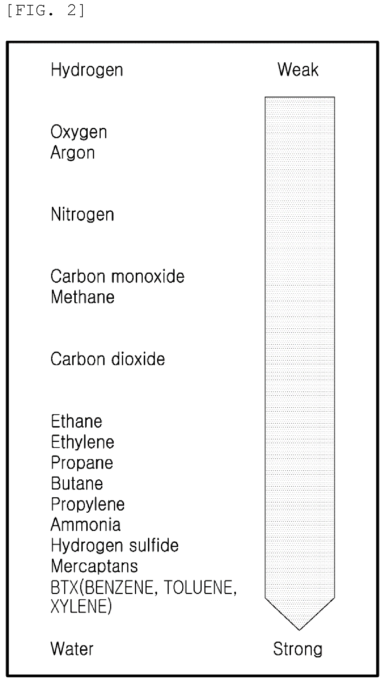

FIG. 2 shows the adsorption selectivity of each gas in the pressure swing absorption device, and the amount of hydrogen production may be maximized by using the adsorption selectivity.

The hydrogen production device of the present disclosure includes a denitrification reactor 900 configured to receive off-gas discharged from the combustor 600, and decompose nitrogen oxides into nitrogen and steam. More specifically, the denitrification reactor 900 decomposes nitrogen oxides included in off-gas discharged from the combustor 600 into nitrogen and steam by using a reducing agent and a catalyst through selective catalytic reduction (SCR). The reducing agent of the denitrification reactor 900 may be ammonia or urea solution.

The distributor 500 may distribute and supply the gaseous ammonia supplied from the pressurizing pump 400 to a decomposition reactor 700, a combustor 600, and a denitrification reactor 900, and the denitrification reactor 900 may use the gaseous ammonia supplied from the distributor 500 as a reducing agent.

The reaction equations of the nitrogen oxide removal reactions occurring in the denitrification reactor 900 are shown below in Equations 5 and 6. In the denitrification reactor 900, 90 to 95 mol % of the removed nitrogen oxides may be NO, and 5 to 10 mol % thereof may be NO2.

[Formula 5] 2NO + 2NH₃ + 0.5O₂ → 2N₂ + 3H₂O

[Formula 6] 2NO₂ + 4NH₃ + O₂ -> 3N₂ + 6H₂O

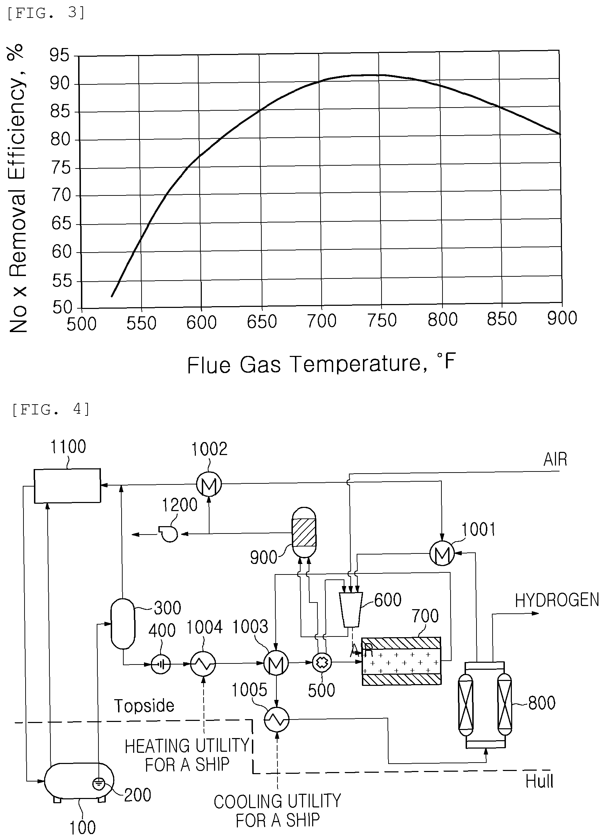

The nitrogen oxide removal rate of the denitrification reactor 900 at each temperature is shown in FIG. 3. Referring to FIG. 3, it may be seen that when the operating temperature of the denitrification reactor 900 is from 250°C to 450°C, specifically, from 350°C (about 662 °F) to 450°C (about 842 °F), a high nitrogen oxide removal efficiency is achieved. Therefore, an appropriate operating temperature of the denitrification reactor 900 may be about 250°C to 450°C or 350°C to 450°C.

When the hydrogen production device of the present disclosure includes a first low-pressure heat recovery heat exchanger 1001, off gas having a temperature of 250°C to 450°C, or 350°C to 450°C may be supplied to the denitrification reactor 900.

FIG. 4 is a schematic view of the hydrogen production device according to an aspect of the present disclosure. The present disclosure will be described in more detail with reference to FIG. 4.

The hydrogen production device of the present disclosure may further include a first low-pressure heat recovery heat exchanger 1001 disposed upstream of the combustor 600. When the first low-pressure heat recovery heat exchanger 1001 is included, it is possible to secure combustion stability by heating gaseous ammonia supplied to the combustor 600.

The first low-pressure heat recovery heat exchanger 1001 may receive off-gas from the pressure swing absorption device 800 and gaseous ammonia from the suction drum 300. Alternatively, gaseous ammonia may be supplied from the second low-pressure heat recovery heat exchanger 1002. The first low-pressure heat recovery heat exchanger 1001 may lower a temperature of off-gas supplied from the pressure swing absorption device 800 and raise a temperature of the gaseous ammonia supplied from the suction drum 300.

The gaseous ammonia discharged from the first low-pressure heat recovery heat exchanger 1001 is supplied to a combustor 600.

The hydrogen production device of the present disclosure may further include a second low-pressure heat recovery heat exchanger 1002 disposed downstream of the denitrification reactor 900. When including the second low-pressure heat recovery heat exchanger 1002, it is possible to lower the temperature of the exhaust gas discharged from the denitrification reactor 900 and stably discharge the same to the outside.

The second low-pressure heat recovery heat exchanger 1002 may receive the exhaust gas from the denitrification reactor 900 and the gaseous ammonia from the suction drum 300.

The exhaust gas discharged from the denitrification reactor 900 may be supplied to a second low-pressure heat recovery heat exchanger 1002 as a power source of the hydrogen production device and when the decomposition reactor 700 lacks thermal energy. When the nitrogen oxide content in the exhaust gas discharged from the denitrification reactor 900 is below an environmental standard value, cold gaseous ammonia at about -33°C from the suction drum 300, may be supplied to the second low-pressure heat recovery heat exchanger 1002 to exchange heat with the exhaust gas, and then stably discharged into the atmosphere.

The hydrogen production device of the present disclosure may further include a high-pressure heat recovery heat exchanger 1003 disposed upstream of the decomposition reactor 700. When including the high-pressure heat recovery heat exchanger 1003, it is possible to increase the temperature of gaseous ammonia supplied to the decomposition reactor 700.

The high-pressure heat recovery heat exchanger 1003 may receive gaseous ammonia from the pressurizing pump 400 and off-gas from the decomposition reactor 700. Alternatively, the high-pressure heat recovery heat exchanger 1003 may receive gaseous ammonia from the first heat exchanger 1004. The temperature of the gaseous ammonia is increased by exchanging heat with off-gas having a higher temperature. Gaseous ammonia discharged from the high-pressure heat recovery heat exchanger 1003 may be supplied to the decomposition reactor 700, and off-gas may be supplied to the pressure swing absorption device 800. Alternatively, off-gas may be supplied to the second heat exchanger 1005.

The hydrogen production device of the present disclosure may further include a first heat exchanger 1004 disposed downstream of the pressurizing pump 400.

The ammonia vaporization reaction occurring in the pressurizing pump 400 is an endothermic reaction. Therefore, the gaseous ammonia discharged from the pressurizing pump 400 has a low temperature. In the first heat exchanger 1004, the temperature of the gaseous ammonia supplied from the pressurizing pump 400 may be increased by applying heating utility for a ship. The gaseous ammonia discharged from the first heat exchanger 1004 may be supplied to the distributor 500. Alternatively, the gaseous ammonia discharged from the first heat exchanger 1004 may be supplied to the high-pressure heat recovery heat exchanger 1003.

The hydrogen production device of the present disclosure may further include a second heat exchanger 1005 disposed upstream of the pressure swing absorption device 800.

The second heat exchanger 1005 may receive off-gas discharged from the decomposition reactor 700. Alternatively, the second heat exchanger 1005 may receive off-gas discharged from the high-pressure heat recovery heat exchanger 1003. The second heat exchanger 1005 may lower a temperature of off-gas supplied to the pressure swing absorption device 800 by applying cooling utility for a ship. Alternatively, the second heat exchanger 1005 may lower the temperature of off-gas using glycol or seawater. The off-gas discharged from the second heat exchanger 1005 is supplied to the pressure swing absorption device 800.

The hydrogen production device of the present disclosure may further include a mixer between the distributor 500 and the combustor 600. The mixer receives gaseous ammonia from the distributor 500 and off-gas discharged from the pressure swing absorption device 800 to mix the gaseous ammonia and off-gas before introducing them into the combustor 600.

When the hydrogen production device includes a first pressure swing absorption device and a second pressure swing absorption device, the mixer may receive off-gas discharged from the second pressure swing absorption device.

The hydrogen production device of the present disclosure may further include a re-liquefaction device 1100 configured to receive gaseous ammonia from an ammonia storage tank for a ship 100 or a suction drum 300, re-liquefy the received gaseous ammonia, and re-supply the re-liquefied ammonia back to the ammonia storage tank for a ship 100 or the suction drum 300.

When the pressure of the ammonia storage tank for a ship 100 or the suction drum 300 is lowered, ammonia may be vaporized. When the amount of vaporized ammonia increases, the pressure of the ammonia storage tank for a ship 100 or the suction drum 300 may abnormally increase. In this case, the vapor phase ammonia contained in the ammonia storage tank for a ship 100 or the suction drum 300 may be supplied to the re-liquefaction device 1100 so that the pressure inside the ammonia storage tank for a ship 100 or the suction drum 300 may be stably maintained.

The hydrogen production device of the present disclosure may further include a fan 1200.

The off-gas discharged from the denitrification reactor 900 may be discharged to the outside through a fan 1200. When the pressure of off-gas discharged from the denitrification reactor 900 is low and thus it is difficult to discharge off-gas into the atmosphere, the pressure of off-gas may be increased by using the fan 1200 so that off-gas may be stably discharged into the atmosphere.

### Experimental Examples.

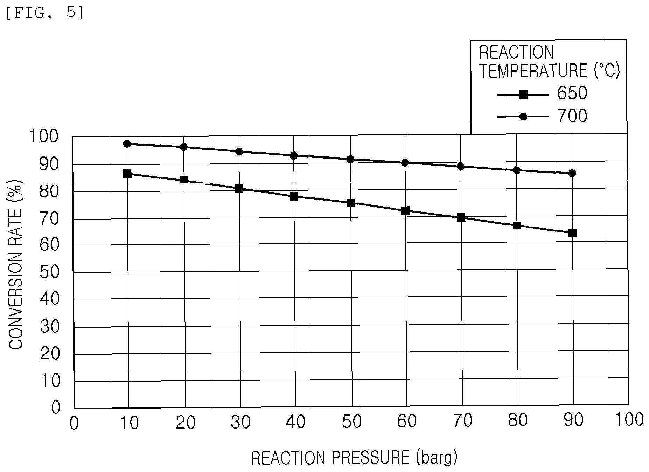

At each temperature of 650°C and 700°C, the decomposition reactor was operated while varying pressures to perform an ammonia decomposition reaction, and the conversion rate of ammonia into nitrogen and hydrogen was calculated, the results of which are shown in FIG. 5.

At a temperature of 700°C, the decomposition reactor was operated at each pressure of 10 barg, 20 barg, 30 barg, 40 barg, 50 barg, 60 barg, 70 barg, 80 barg and 90 barg. A low-cost catalyst containing nickel in an amount of 30 to 60 wt% was used as the catalyst.

At a temperature of 650°C, the decomposition reactor was operated at each pressure of 10 barg, 20 barg, 30 barg, 40 barg, 50 barg, 60 barg, 70 barg, 80 barg and 90 barg, using the same catalyst.

Referring to FIG. 5, it was confirmed that when the operating temperature of the decomposition reactor is 700°C or higher, a conversion rate of 80% or more may be achieved even at high pressures from 60 barg to 90 barg.

While example embodiments have been shown and described above, it will be apparent to those skilled in the art that modifications and variations could be made without departing from the scope of the present disclosure as defined by the appended claims.

### Description of Reference Characters

100: Ammonia storage tank for a ship, 200: Tank pump, 300: Suction drum, 400: Pressurizing pump, 500: Distributor, 600: Combustor, 700: Decomposition reactor, 800: Pressure swing absorption device, 900: Denitrification reactor, 1001: First low-pressure heat recovery heat exchanger, 1002: Second low-pressure heat recovery heat exchanger, 1003: High-pressure heat recovery heat exchanger, 1004: First heat exchanger, 1005: Second heat exchanger, 1100: Re-liquefaction device, 1200: Fan

## Claims

1. A hydrogen production device comprising:
an ammonia storage tank for a ship;
a tank pump configured to pressurize liquid ammonia in the ammonia storage tank for a ship, and supply the pressurized liquid ammonia to a suction drum;
a suction drum configured to stabilize pressure of the liquid ammonia supplied from the tank pump, and supply the pressurized liquid ammonia to a pressurizing pump;
a pressurizing pump configured to pressurize the liquid ammonia supplied from the suction drum, vaporize the liquid ammonia, and supply the produced gaseous ammonia to a distributor;
a distributor configured to distribute and supply the gaseous ammonia supplied from the pressurizing pump to a decomposition reactor and a combustor;
a combustor configured to combust the gaseous ammonia supplied from the distributor, and supply heat to the decomposition reactor;
a decomposition reactor configured to decompose the gaseous ammonia supplied from the distributor into hydrogen and nitrogen at 400°C to 900°C in the presence of a catalyst;
a pressure swing absorption (PSA) device configured to receive off-gas discharged from the decomposition reactor, and separate hydrogen therefrom; and
a denitrification reactor configured to receive off-gas discharged from the combustor, and decompose nitrogen oxides into nitrogen and steam.

2. The hydrogen production device of claim 1, wherein the conversion rate of the ammonia decomposition reaction occurring in the decomposition reactor is 80% or more.

3. The hydrogen production device of claim 1, comprising two or more pressure swing absorption devices.

4. The hydrogen production device of claim 3, further comprising:
a first pressure swing absorption device configured to receive off-gas discharged from the decomposition reactor and adsorb ammonia; and
a second pressure swing absorption device configured to receive off-gas discharged from the first pressure swing absorption device and adsorb nitrogen.

5. The hydrogen production device of claim 4, further comprising a purge gas supply line configured to supply off-gas discharged from the second pressure swing absorption device as a purge gas to the first pressure swing absorption device.

6. The hydrogen production device of claim 1, wherein the distributor distributes and supplies the gaseous ammonia supplied from the pressurizing pump to a decomposition reactor, a combustor, and a denitrification reactor, and
the denitrification reactor uses the gaseous ammonia supplied from the distributor as a reducing agent.

7. The hydrogen production device of claim 1, further comprising a first low-pressure heat recovery heat exchanger disposed upstream of the combustor.

8. The hydrogen production device of claim 1, further comprising a second low-pressure heat recovery heat exchanger disposed downstream of the denitrification reactor.

9. The hydrogen production device of claim 1, further comprising a high-pressure heat recovery heat exchanger disposed upstream of the decomposition reactor.

10. The hydrogen production device of claim 1, further comprising a first heat exchanger disposed downstream of the pressurizing pump.

11. The hydrogen production device of claim 1, further comprising a second heat exchanger disposed upstream of the pressure swing absorption device.

12. The hydrogen production device of claim 1, further comprising a mixer between the distributor and the combustor.

13. The hydrogen production device of claim 1, further comprising a re-liquefaction device configured to receive gaseous ammonia from the ammonia storage tank for a ship or the suction drum, re-liquefy the received gaseous ammonia, and re-supply the re-liquefied ammonia back to the ammonia storage tank for a ship or the suction drum.

14. The hydrogen production device of claim 13, wherein the gaseous ammonia discharged from the second low-pressure heat recovery heat exchanger is supplied to a re-liquefaction device.

15. The hydrogen production device of claim 1, further comprising a fan disposed downstream of the denitrification reactor.

16. A ship comprising the hydrogen production device of any one of claims 1 to 15.
